# EUROPÄISCHE PATENTSCHRIFT

(11) **EP 2 016 220 B1**
(45) Veröffentlichungstag und Bekanntmachung des Hinweises auf die Patenterteilung: **03.10.2012**
(21) Anmeldenummer: 07724358.2
(22) Anmeldetag: 19.04.2007
(51) Int. Cl.: D06M 15/55, C08J 5/06

(54) **KOHLENSTOFFFASER**
CARBON FIBER
FIBRES DE CARBONE

(30) Priorität: 28.04.2006 EP 06008904
(43) Veröffentlichungstag der Anmeldung: 21.01.2009
(73) Patentinhaber: Toho Tenax Europe GmbH, 42103 Wuppertal (DE)
(72) Erfinder: STÜSGEN, Silke, 40670 Meerbusch (DE); WOHLMANN, Bernd, 40627 Düsseldorf (DE); SCHUBERT, Matthias, 42105 Wuppertal (DE)
(74) Vertreter: Schröder, Richard
(86) Internationale Anmeldenummer: PCT/EP2007/003421
(87) Internationale Veröffentlichungsnummer: WO 2007/124867

(56) Entgegenhaltungen:
- EP-A- 1 413 670
- EP-A1- 0 947 562
- EP-A1- 1 624 018
- US-B1- 6 399 199
- DATABASE WPI Week 200473 Derwent Publications Ltd., London, GB; AN 2004-740011 XP002404651 & JP 2004 285488 A (TOHO RAYON KK) 14. Oktober 2004 (2004-10-14)

## Beschreibung

Die Erfindung betrifft Kohlenstofffasern und ein Kohlenstofffasergarn, enthaltend derartige Kohlenstofffasern.

Kohlenstofffasern sind vielfach bekannt. Ein großes Anwendungsgebiet für Kohlenstofffasern ist die Verstärkung von Kunststoffen. Dem Zusammenspiel von Kohlenstofffasern und dem zu verstärkenden Kunststoff wird immer größere Bedeutung beigemessen, um den verstärkten Kunststoff für höhere Anforderungen geeignet zu machen.

Die vorliegende Erfindung hat sich zur Aufgabe gestellt, zur Verstärkung von Kunststoffen besonders geeignete Kohlenstofffasern zur Verfügung zu stellen. Diese Kohlenstofffasern sollen insbesondere für die Verstärkung von Polyvinylestern (PVE) geeignet sein.

Diese Aufgabe wird durch Kohlenstofffasern, welche durch elektrochemische Oxidation vorbehandelt wurden, dadurch gelöst, dass sie eine aus Epoxidharz(en), einer Vinylkomponente und einem Plastifizierer bestehenden Präparation in einer Menge von 0,3 bis 5 Gew.-% , bezogen auf die mit Präparation versehenen Kohlenstofffasern aufweisen.

Ähnliche Zusammensetzungen sind zwar als Matrix für Prepregs bekannt (WO 99/19407). Diese Zusammensetzungen weisen aber noch weitere Bestandteile wie beispielsweise Härter auf, die eine spezielle Lagerung der Prepregs zur Vermeidung der Aushärtung der Matrix erforderlich machen. Es muss als überraschend angesehen werden, dass der Einsatz von bestimmten Bestandteilen einer als Matrix für Prepregs bekannten Zusammensetzung es möglich macht, diese abgewandelte Zusammensetzung als Präparation für Kohlenstofffasern einzusetzen. Kohlenstofffasern, die diese Präparation enthalten, eignen sich vorzüglich zur Verstärkung von PVE, wobei es dann nicht mehr erforderlich ist, derart aufwendige Zusammensetzungen für die Matrix herzustellen, wie sie im Stand der Technik beschrieben sind. Gleichzeitig sind die erfindungsgemäßen Kohlenstofffasern auf Spulen aufwickelbar und ohne besondere Maßnahmen über längere Zeiträume lagerfähig.

Bevorzugt weisen die erfindungsgemäßen Kohlenstofffasern die Präparation in einer Menge von 1,0 bis 1,5 Gew.-%, jeweils bezogen auf das Gesamtgewicht der Kohlenstofffasern mit der Präparation auf.

Hierbei hat es sich als besonders vorteilhaft herausgestellt, wenn für die Präparation der erfindungsgemäßen Kohlenstofffasern als Epoxidharz eine Mischung E ausgewählt wird, welche aus zumindest zwei Epoxidharzen E1 und E2 zusammengesetzt ist, wobei E1 einen Epoxidwert im Bereich von 2.000 bis 2.300 mmol/kg Harz, und E2 einen Epoxidwert im Bereich von 500 bis 650 mmol/kg Harz, und das Gewichtsverhältnis E1:E2 der Epoxidharze E1 und E2 in der Mischung so gewählt ist, dass das Harzgemisch einen Epoxidwert zwischen 550 und 2100 mmol/kg Harz aufweist.

Die erfindungsgemäßen Kohlenstofffasern weisen insbesondere eine Präparation auf, welche 10 bis 40 Gew.-% der Epoxidharzmischung, 10 bis 40 Gew.-% der Vinylkomponente und 20 bis 50 Gew.-% des Plastifizierers enthält, wobei die Summe aller Komponenten 100 Gew.-% beträgt. Bevorzugt weisen die erfindungsgemäßen Kohlenstofffasern eine Präparation auf, welche 20 bis 35 Gew.-% der Epoxidharzmischung, 20 bis 35 Gew.-% der Vinylkomponente und 25 bis 40 Gew.-% des Plastifizierers enthält, wobei wiederum alle Komponenten zusammen 100 Gew.-% ergeben.

Besonders vorteilhaft ist die Verwendung einer mehrfunktionellen Vinylkomponente. Beispiel einer solcher Vinylkomponenten ist Tetramethacrylatester von N,N,N',N' - tetraglycidyl-m-Xylendiamin.

Als Plastifizierer haben sich insbesondere solche Substanzen bewährt, die thermoplastisches, also duktiles Verhalten zeigen, beispielsweise aromatische Polyhydroxyether oder mit NBR - Kautschuk (Acrylnitril-Butadien-Kautschuk) modifizierte Harze.

Die erfindungsgemäßen Kohlenstofffasern zeichnen sich insbesondere dadurch aus, dass sie, zu einem Probenkörper mit einer Matrix aus Polyvinylesterharz verarbeitet, eine scheinbare interlaminare Scherfestigkeit nach EN 2563 von mindestens 65 MPa und eine interlaminare Energiefreisetzungsrate gemäß EN 6033 von mindestens 750 J/m² aufweisen, wobei der Probenkörper der in EN 2565 geforderten Qualität der CFK-Prüfplatten entspricht.

Die heute auf dem Markt befindlichen Kohlenstofffasern weisen, eingebettet auf die beschriebene Weise gemäß EN 2565, Verfahren A, eine scheinbare interlaminare Scherfestigkeit von 57 MPa (Type HTS 5631, 12K von der Anmelderin) bzw. 61 MPa (Type T 700 SC FOE, 12K von Toray) und eine interlaminare Energiefreisetzungsrate von 479 J/m² (Type HTS 5631, 12K) bzw. 1078 J/m² (Type T 700 SC FOE) auf. Insofern stellt die vorliegende Erfindung neue Kohlenstofffasern mit überraschend guter Eigenschaftskombination im Verbund mit Polyvinylestern zur Verfügung.

Insbesondere weisen die erfindungsgemäßen Kohlenstofffasern, zu einem Probenkörper gemäß EN 2565 verarbeitet, eine scheinbare Scherfestigkeit nach EN 2563 zwischen 65 und 80 MPa und eine interlaminare Energiefreisetzungsrate gemäß EN 6033 zwischen 750 und 1500 J/m² auf.

Bei den zitierten Normen handelt es sich bei EN 2563 um die Ausgabe vom März 1997, bei EN 6033 um die Ausgabe vom April 1996 und bei EN 2565 um die Ausgabe vom September 1993.

Es ist auch Gegenstand der vorliegenden Erfindung ein Kohlenstofffasergarn, welches 3.000 bis 24.000, insbesondere 12.000 bis 24.000 aus erfindungsgemäßen Kohlenstofffasern bestehende Kohlenstofffilamente aufweist.

Hinsichtlich der Qualität der CFK-Prüfplatten gemäß EN 2565 wird gemäß 5.3.4 bestimmt, dass jede CFK-Prüfplatte unter Verwendung eines Prüfkopfes H5M (Fa. Krautkrämer) ein Ultraschall C-Scanbild aufweist, bei dem nicht mehr als 5% der gescannten Fläche eine Dämpfung von mehr als 5 dB aufweist.

Für das Polyvinylesterharz der Matrix wird ein Polyvinylesterharzsystem zur Herstellung der CFK-Prüfplatten eingesetzt, welches folgende Zusammensetzung aufweist:

| | |
|---|---|
| 100 g | Derakane 8084, erhältlich bei Firma DOW Derakane |
| 2g | Butanox LPT, erhältlich bei Firma Akzo Nobel Chemicals bv |
| 1g | NL 49 P, erhältlich bei Akzo Nobel Chemicals bv |
| 0.05 g | NL 63-10, erhältlich bei Akzo Nobel Chemicals bv |

Da dieses Polyvinylesterharzsystem sehr schnell aushärtet (Topfzeit etwa 30 min), ist zu empfehlen, in Anlehnung an das in EN 2565 beschriebene Verfahren A (Nass - Auflege - Verfahren) das Garn auf einer Wickelplatte mit 2 parallelen und gegenüber liegenden Formen und mit seitlichen Stegen zur Begrenzung der Wickelbreite unter konstanter Fadenspannung aufzuwickeln und beim Aufwickeln die Kohlenstofffasern mit dem Harzsystem zu imprägnieren. Die Imprägnierung erfolgt vorzugsweise mittels Walzenimprägnierung, wobei die aufzutragende Harzmenge über Rakel eingestellt wird. Die Bewicklung der Platte erfolgt derart, dass pro Lage ein Faserflächengewicht von 267 g/m² mit 0,25 mm Dicke erzeugt wird.

Bei der nachfolgenden Behandlung werden die beiden auf den gegenüberliegenden Flächen angeordneten Laminataufbauten zunächst 24 Stunden bei 23 °C gehärtet und danach 15 Stunden bei 60 °C getempert, wobei sie unter einem Druck von 5 bar gehalten werden. Die erforderliche Laminatdicke wird durch Verwendung von Abstandsleisten gewährleistet. Die Verwendung von Absauggeweben zur Aufnahme von überschüssigem Harz wie auch das Aufschneiden der Laminataufbauten an den Stirnseiten der Wickelplatte nach Erreichen der Topfzeit zum Abbau innerer Spannungen sind weitere Maßnahmen, um die in EN2565 geforderte Qualität der CFK - Prüfplatten zu erreichen, wobei alle Schritte so aufeinander abgestimmt sind, dass der Harzanteil des fertigen Prüfkörpers bei 40 ± 4 Vol.-% liegt.

Die Erfindung wird anhand der nachfolgenden Beispiele näher erläutert.

Zur Herstellung der erfindungsgemäßen Kohlenstofffasern werden für die Präparation bei den nachfolgenden Beispielen folgende Substanzen verwendet:

Als Epoxidkomponente wird eine Mischung E eingesetzt, welche aus zwei Epoxidharzen E1 und E2 zusammengesetzt ist, wobei E1 einen Epoxidwert von 2.000 mmol/kg Harz und E2 einen Epoxidwert von 540 mmol/kg Harz aufweist, und das Gewichtsverhältnis E1 / E2 der Epoxidharze E1 und E2 einen Wert von 1,2 aufweist.

Als Vinylkomponente V wurde Tetramethacrylatester von N,N,N',N' - tetraglycidyl-m-Xylendiamin verwendet.

Als Plasifizierer wurden folgende Substanzen eingesetzt:
P1: Hydrosize HP3-02, angeboten von Hydrosize Technologies, Inc. Hierbei handelt es sich um einen modifizierten aromatischen Polyhydoxyether.

Die für die Präparation verwendeten Kohlenstofffasergarne enthielten jeweils 12.000 bzw. 24.000 Kohlenstofffilamente, die durch elektrochemische Oxidation vorbehandelt waren. Die Garne wurden mit verschiedenen Präparationsmischungen beschichtet und anschließend getrocknet. Die zur Präparation verwendeten Mischungen, die Garnauftragsmenge und die Eigenschaften der Garne sind in der nachfolgenden Tabelle aufgeführt.

**Tabelle**

| Präparation | Filamentzahl | Auftragsmenge | scheinbare interlaminare Scherfestigkeit | interlaminare Energiefreisetzungsrate |
|---|---|---|---|---|
| | | Gew.-% | MPa | J/m² |
| 2%E,2%V,2%P1 in Wasser | 24.000 | 1,1 | 70 | 1319 |
| 2% E, 2% V, 2% P1 in Wasser | 24.000 | 1,5 | 69 | 1138 |
| 2% E, 2% V, 2% P1 in Wasser | 24.000 | 0,4 | 69 | 1020 |
| 1,33% E, 1,33% V, 1,33% P1 in Wasser | 12.000 | 1,1 | 69 | 1013 |

Wie aus der Tabelle deutlich wird, ergeben sich mit der PVE-Matrix Derakane 8084 überraschend hohe Werte für die scheinbare interlaminare Scherfestigkeit und die interlaminare Energiefreisetzungsrate.

## Patentansprüche

1. Kohlenstofffasern, welche durch elektrochemische Oxidation vorbehandelt wurden, **dadurch gekennzeichnet, dass** sie eine aus Epoxidharz(en), einer Vinylkomponente und einem Plastifizierer bestehende Präparation in einer Menge von 0,3 bis 5 Gew.-%, bezogen auf die mit Präparation versehenen Kohlenstofffasern aufweisen.

2. Kohlenstoffasern nach Anspruch 1, **dadurch gekennzeichnet, dass** sie die Präparation in einer Menge von 1,0 bis 1,5 Gew.-%, bezogen auf das mit Präparation versehene Kohlenstofffasergarn aufweisen.

3. Kohlenstofffasern nach Anspruch 1 oder 2, **dadurch gekennzeichnet, dass** das Epoxidharz eine Mischung E ist, welche aus zumindest zwei Epoxidharzen E1 und E2 zusammengesetzt ist, wobei E1 einen Epoxidwert im Bereich von 2.000 bis 2.300 mmol/kg Harz, und E2 einen Epoxidwert im Bereich von 500 bis 650 mmol/kg Harz aufweist, und das Gewichtsverhältnis E1:E2 der Epoxidharze E1 und E2 in der Mischung so gewählt ist, dass das Harzgemisch einen Epoxidwert zwischen 550 und 2100 mmol/kg Harz aufweist.

4. Kohlenstofffasern nach einem oder mehreren der Ansprüche 1 bis 3, **dadurch gekennzeichnet, dass** als Vinylkomponente eine mehrfunktionelle Vinylkomponente verwendet wird.

5. Kohlenstofffasern nach Anspruch 4, **dadurch gekennzeichnet, dass** als Vinylkomponente ein Tetramethacrylatester von N,N,N',N' - tetraglycidyl-m-Xylendiamin verwendet wird.

6. Kohlenstofffasern nach einem oder mehreren der Ansprüche 1 bis 5, **dadurch gekennzeichnet, dass** als Plastifizierer Substanzen eingesetzt werden, die ein thermoplastisches und duktiles Verhalten zeigen.

7. Kohlenstofffasern nach einem oder mehreren der Ansprüche 1 bis 6, **dadurch gekennzeichnet, dass** als Plastifizierer Polyhydroxyether oder mit NBR-Kautschuk modifizierte Harze eingesetzt werden.

8. Kohlenstofffasergarn enthaltend 3.000 bis 24.000, bevorzugt 12.000 bis 24.000 aus Kohlenstofffasern nach einem oder mehreren der Ansprüche 1 bis 7 bestehende Kohlenstofffilamente.

## Claims

1. Carbon fibers, which have been pretreated by electrochemical oxidation, **characterized in that** they have a finish consisting of epoxy resin(s), a vinyl component, and a plasticizer, the finish being in an amount of 0.3 to 5 wt.% relative to the carbon fibers provided with the finish.

2. Carbon fibers according to Claim 1, **characterized in that** they have the finish in an amount of 1.0 to 1.5 wt.% relative to the carbon fiber yarn provided with the finish.

3. Carbon fibers according to Claim 1 or 2, **characterized in that** the epoxy resin is a mixture E, which consists of at least two epoxy resins E1 and E2, E1 having an epoxy value in the range of 2,000 to 2,300 mmol/kg resin, and E2 having an epoxy value in the range of 500 to 650 mmol/kg resin, and the weight ratio E1:E2 of the epoxy resins E1 and E2 in the mixture being so chosen, that the resin mixture has an epoxy value between 550 and 2100 mmol/kg resin.

4. Carbon fibers according to one or more of Claims 1 to 3, **characterized in that** a multifunctional vinyl component is used as the vinyl component.

5. Carbon fibers according to Claim 4, **characterized in that** tetramethacrylate ester of N,N,N',N'-tetraglycidyl-m-xylenediamine is used as the vinyl component.

6. Carbon fibers according to one or more of Claims 1 to 5, **characterized in that** substances are used as the plasticizer, that show a thermoplastic and ductile behavior.

7. Carbon fibers according to one or more of Claims 1 to 6, **characterized in that** polyhydroxyethers or resins modified with NBR rubber are used as the plasticizer.

8. Carbon fiber yarn containing 3,000 to 24,000, preferably 12,000 to 24,000 carbon filaments consisting of carbon fibers according to one or more of Claims 1 to 7.

## Revendications

1. Fibres de carbone qui ont été soumises à un traitement préalable par oxydation électrochimique, **caractérisées en ce qu'**elles renferment une préparation composée d'une ou plusieurs résines époxy, d'un composant vinylique et d'un plastifiant, en une quantité comprise entre 0,3 et 5 % en poids, rapportée aux fibres de carbone pourvues de la préparation.

2. Fibres de carbone selon la revendication 1, **caractérisées en ce qu'**elles renferment la préparation en une quantité comprise entre 1,0 et 1,5 % en poids, rapportée au fil de fibres de carbone pourvu de la préparation.

3. Fibres de carbone selon la revendication 1 ou 2, **caractérisées en ce que** la résine époxy est un mélange E qui se compose d'au moins deux résines époxy E1 et E2, E1 présentant une valeur époxy dans la plage comprise entre 2 000 et 2 300 mmol/kg de résine, et E2 présentant une valeur époxy dans la plage comprise entre 500 et 650 mmol/kg de résine, et le rapport de poids E1:E2 des résines époxy E1 et E2 dans le mélange étant choisi tel que le mélange de résines présente une valeur époxy comprise entre 550 et 2 100 mmol/kg de résine.

4. Fibres de carbone selon une ou plusieurs des revendications 1 à 3, **caractérisées en ce que** l'on utilise en tant que composant vinylique un composant vinylique multifonctionnel.

5. Fibres de carbone selon la revendication 4, **caractérisées en ce que** l'on utilise en tant que composant vinylique un tétraméthacrylate ester de N,N,N',N'-tétraglycidyle-m-Xylènediamine.

6. Fibres de carbone selon une ou plusieurs des revendications 1 à 5, **caractérisées en ce que** l'on utilise comme plastifiants des substances qui présentent un comportement thermoplastique et ductile.

7. Fibres de carbone selon une ou plusieurs des revendications 1 à 6, **caractérisées en ce que** l'on utilise comme plastifiants des polyhydroxyéthers ou des résines modifiées avec du caoutchouc NBR.

8. Fil de fibres de carbone, comportant des filaments de carbone constitués de 3 000 à 24 000, de préférence de 12 000 à 24 000, fibres de carbone selon une ou plusieurs des revendications 1 à 7.
